(19) **Europäisches Patentamt / European Patent Office / Office européen des brevets**

(11) **EP 3 705 852 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **20158062.8**

(22) Anmeldetag: **18.02.2020**

(51) Internationale Patentklassifikation (IPC):
**G01F 1/66** (2022.01)

(52) Gemeinsame Patentklassifikation (CPC):
**G01F 1/66;** G01F 1/667

(54) **VERFAHREN UND MESSEINRICHTUNG ZUR ERMITTLUNG EINER FLUIDGRÖSSE**

METHOD AND MEASUREMENT DEVICE FOR DETECTING A FLUID CHARACTERISTIC

PROCÉDÉ ET APPAREIL DE DÉTERMINATION D'UN CARACTÉRISTIQUE DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2019 DE 102019001592**

(43) Veröffentlichungstag der Anmeldung:
**09.09.2020 Patentblatt 2020/37**

(73) Patentinhaber: **Diehl Metering GmbH**
**91522 Ansbach (DE)**

(72) Erfinder:
• **Mayle, Michael**
**91522 Ansbach (DE)**

• **Benkert, Andreas**
**91522 Ansbach (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
WO-A2-2010/034713     CN-A- 107 636 425
DE-A1-102017 006 173     DE-A1-102017 008 776
US-A1- 2006 020 404

## Beschreibung

Die Erfindung betrifft ein Verfahren zur Ermittlung einer ein Fluid und/oder eine Fluidströmung des Fluids betreffenden Fluidgröße durch eine Messeinrichtung, insbesondere durch einen Durchflusszähler, die ein Messrohr, das zur Aufnahme oder Führung eines Fluids dient, und einen an einer Seitenwand des Messrohrs angeordneten ersten und zweiten Schwingungswandler aufweist, wobei die Steuereinrichtung für eine erste Messrichtung den ersten Schwingungswandler zur Anregung einer in der Seitenwand geführten Messwelle und für eine zweite Messrichtung den zweiten Schwingungswandler zur Anregung einer in der Seitenwand geführten Messwelle ansteuert, wobei die angeregten Messwellen jeweils direkt in der Seitenwand oder indirekt über das Fluid zu dem jeweils anderen Schwingungswandler geführt und dort zur Ermittlung eines jeweiligen Empfangssignals erfasst werden, wobei ein erster Phasenversatz zwischen den für die erste und die zweite Messrichtung erfassten Empfangssignalen ermittelt wird. Daneben betrifft die Erfindung eine Messeinrichtung.

Eine Möglichkeit, einen Durchfluss durch ein Messrohr zu messen, sind Ultraschallzähler.

Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern bzw. einem Laufzeitunterschied bei einer Vertauschung von Sender und Empfänger kann eine Durchflussgeschwindigkeit durch das Messrohr bestimmt werden. Die Ultraschallwelle kann unmittelbar in das Fluid ein- bzw. aus diesem ausgekoppelt werden. Alternativ ist es jedoch auch möglich, Ultraschallwellen dadurch in das Fluid ein- bzw. aus diesem auszukoppeln, indem geführte Wellen in der Seitenwand des Messrohrs angeregt bzw. von dort erfasst werden. Dies ist beispielsweise aus der Druckschrift WO 2010/034713 A2, oder aus DE 10 2017 008776 A1 bekannt.

Insbesondere bei relativ kurzen Messstrecken kann ein Laufzeitunterschied mit hoher Genauigkeit ermittelt werden, wenn eine Phasendifferenz zwischen Empfangssignalen für die beiden Ausbreitungsrichtungen ausgewertet wird. Hierbei ist jedoch problematisch, dass ein derartiger Phasenversatz zwischen den Empfangssignalen verschiedenen Laufzeitdifferenzen entsprechen kann, da eine Änderung der Laufzeitdifferenz um eine Periodendauer der Ultraschallwelle zu dem gleichen Phasenversatz führt. Die Laufzeit kann somit mit diesem Ansatz nur dann eindeutig bestimmt werden, wenn sichergestellt werden kann, dass die Laufzeitdifferenzen in einem engen Intervall liegen, beispielsweise wenn bekannt ist, dass ein gewisses Durchflussvolumen nicht überschritten wird.

Soll eine Bestimmung der Laufzeitdifferenz bzw. eines Durchflusses auch bei stark unterschiedlichen Laufzeitdifferenzen mit der erläuterten Methode ermittelt werden, müssen demnach Ultraschallwellen mit relativ geringen Frequenzen genutzt werden, was wiederum die Messgenauigkeit senkt. Um eine Erweiterung des Messbereichs ohne sinkende Messgenauigkeit zu ermöglichen, schlägt die Druckschrift DE 10 2011 016 963 A1 vor, nacheinander eine Anregung mit Ultraschallsignalen unterschiedlicher Frequenzen durchzuführen. Dies erfordert jedoch eine relativ aufwändige Steuerelektronik. Zudem kann hierdurch die Effizienz der Anregung sinken, da typischerweise eine optimale Anregungseffizienz bei einer bestimmten Resonanzfrequenz erreicht wird.

Der Erfindung liegt somit die Aufgabe zugrunde, ein demgegenüber verbessertes Messverfahren anzugeben, das es auf relativ einfache Weise ermöglicht, eine phasenversatzbasierte Laufzeitmessung mit hoher Genauigkeit über große Laufzeitbereiche nutzen zu können.

Die Aufgabe wird erfindungsgemäß durch ein Verfahren der eingangs genannten Art gelöst, wobei der erste Phasenversatz für eine erste Schwingungsmode der Seitenwand ermittelt wird,

- wobei entweder stets oder ausschließlich bei Erfüllung einer von dem ersten Phasenversatz abhängenden Ermittlungsbedingung die Messung für eine zweite Schwingungsmode der Seitenwand wiederholt wird, um einen zweiten Phasenversatz zu ermitteln, wonach die Fluidgröße in Abhängigkeit des ersten und des zweiten Phasenversatzes derart ermittelt wird, dass die Fluidgröße oder ein Zwischenergebnis, aus dem die Fluidgröße berechnet wird, berechnet wird, indem zu dem ersten Phasenversatz oder einem aus dem ersten Phasenversatz berechneten Rechenwert ein fester Offsetwert addiert wird, wenn der zweite Phasenversatz einen vorgegebenen Grenzwert überschreitet oder umgekehrt, oder
- wobei die erste Schwingungsmode in Abhängigkeit eines Prognosewertes, der einen erwarteten Fluiddurchfluss durch das Messrohr oder eine von dem erwarteten Fluiddurchfluss abhängige Größe betrifft, gewählt wird.

Im erfindungsgemäßen Verfahren wird ausgenutzt, dass eine Laufzeit einer Messwelle zwischen den Schwingungswandlern bei einer indirekten Anregung einer Druckwelle im Fluid über in der Messwand geführte Messwellen nicht ausschließlich von der Frequenz der Messwelle abhängt, sondern auch davon, welche Schwingungsmode angeregt bzw. für welche Schwingungsmode Messsignale ermittelt werden. Die angeregte Messwelle kann insbesondere eine Lamb-Welle sein. Hierbei ist es bekannt, dass bei Lamb-Wellen stets zumindest zwei, bei höheren Werten des Produkts aus Kreisfrequenz und Wanddicke auch mehr, Schwingungsmoden der gleichen Frequenz angeregt werden können.

Beispielsweise kann wenigstens eine antisymmetrische und wenigstens eine symmetrische Schwingungsmode angeregt werden. Diese Schwingungsmoden weisen unterschiedliche Phasengeschwindigkeiten auf, so dass auch der Rayleigh-Winkel, mit dem durch die geführte Welle angeregte Druckwellen in das Fluid abgestrahlt werden, für die unterschiedlichen Schwingungsmoden unterschiedlich ist. Hieraus resultieren unterschiedliche Ausbreitungspfade für die unterschiedlichen Schwingungsmoden und somit auch unterschiedliche Laufzeiten bzw. unterschiedliche Phasenversätze. Dies kann ausgenutzt werden, um zumindest für einige der Fälle die oben genannte Uneindeutigkeit aufzuheben und somit einen eindeutigen Laufzeitunterschied bzw. einen eindeutigen Durchfluss zu ermitteln.

Der Einfluss der Phasengeschwindigkeit der Messwelle in der Seitenwand auf den Laufzeitunterschied der gemessenen Welle zwischen den Ausbreitungsrichtungen bzw. auf den gemessenen Phasenversatz wird im Folgenden kurz dargestellt. Wie prinzipiell aus dem Bereich von Ultraschallzählern bekannt ist, lässt sich der Laufzeitunterschied $\Delta T$ wie folgt darstellen:

$$(1) \qquad \Delta T \approx \frac{2L\bar{v}_p}{c_f^2} = \frac{2\bar{v}_p nd \cdot \tan\theta}{c_f^2}$$

Hierbei ist L die Länge des Pfades der Ultraschallwelle durch das Fluid, $\bar{v}_p$ die mittlere Flussgeschwindigkeit des Fluids entlang dem Ausbreitungspfad, und $c_f$ die Phasengeschwindigkeit der Welle im Fluid. Die Länge L des Ausbreitungspfades lässt sich aus der Anzahl der Durchquerungen des Messrohrs n, die um 1 größer ist als die Anzahl der Reflexionen der Druckwelle an der Messrohrwand, dem Wandabstand d und dem Winkel $\Theta$ zwischen der Ausbreitungsrichtung der Ultraschallwelle und der Seitenwand wie oben dargestellt ermitteln. Wird die Ultraschallwelle im Fluid durch eine geführte Welle der Seitenwand, insbesondere eine Lamb-Welle, angeregt, so entspricht der Winkel $\Theta$ dem Rayleigh-Winkel, der sich aus der Schallgeschwindigkeit $c_f$ im Fluid und der Phasengeschwindigkeit $c_{ph}$ der jeweiligen Mode in der Seitenwand wie folgt errechnet:

$$(2) \qquad \sin\theta = \frac{c_f}{c_{ph}}$$

Durch Einsetzen und Umformen unter Ausnutzung von bekannten Zusammenhängen der trigonometrischen Funktionen lässt sich der Laufzeitunterschied zwischen den Ausbreitungsrichtungen für eine bestimmte Mode wie folgt ausdrücken:

$$(3) \qquad \Delta T \approx \frac{2\bar{v}_p nd}{c_f c_{ph} \sqrt{1 - \frac{c_f^2}{c_{ph}^2}}}$$

Für eine bestimmte Messrohrgeometrie, beispielsweise für ein rechteckiges Messrohr, kann ein Umrechnungsfaktor w bestimmt werden, um die Abhängigkeit von der mittleren Flussgeschwindigkeit parallel zur Ausbreitungsrichtung $\bar{v}_p$ durch eine Abhängigkeit vom Durchflussvolumen Q zu ersetzen. Wird zugleich berücksichtigt, dass der Laufzeitunterschied $\Delta T$ abgesehen von einem ganzzahligen Vielfachen a der Periode T der Messwelle bzw. Schwingungsmode eindeutig über die Frequenz f der Messwelle bzw. Schwingungsmode mit dem gemessenen Phasenversatz $\Delta\varphi_m$ in Zusammenhang steht, kann die folgende Gleichung ermittelt werden:

$$(4) \qquad \frac{\Delta\varphi_m}{f \cdot 360°} + a \cdot T = \Delta T \approx \frac{Q}{w} \frac{2n}{c_f c_{ph} \sqrt{1 - \frac{c_f^2}{c_{ph}^2}}}$$

Da die Messgeometrie, die Phasengeschwindigkeiten und die Anregungsfrequenz bekannt sind, kann somit aus dem Phasenversatz $\Delta\varphi_m$ abgesehen von dem unbekannten Faktor a eindeutig ein Durchflussvolumen Q ermittelt werden. Die fehlende Information über den Faktor a resultiert daraus, dass der gemessene Phasenversatz $\Delta\varphi_m$ mit dem Laufzeitunterschied $\Delta T$ periodisch variiert.

Wie bereits eingangs erläutert, kann eine Messung des Durchflussvolumens oder ähnlicher Parameter auf Basis eines gemessenen Phasenversatzes dann problemlos durchgeführt werden, wenn sichergestellt werden kann, dass der Laufzeitunterschied $\Delta T$ kleiner ist als die Periodendauer $T$ der genutzten Messwelle. Im erfindungsgemäßen Verfahren wird eine Messeinrichtung genutzt, die, wie später noch genauer erläutert werden wird, die Messung des Phasenversatzes modenselektiv für verschiedene Schwingungsmoden bei der gleichen Frequenz durchführen kann. Erfindungsgemäß wird zur Wahl der Schwingungsmode zunächst ein Prognosewert ermittelt, der beispielsweise einen erwarteten Fluiddurchfluss bzw. einen erwarteten Wert einer hiervon abhängenden Größe betreffen kann. Beispielsweise kann ein maximal zu erwartender Durchfluss für eine bestimmte Messanwendung bzw. der in einem bestimmten Messintervall voraussichtlich auftritt bekannt sein, oder es können beispielsweise unmittelbar vorangehende Messwerte berücksichtigt werden, wenn beispielsweise bekannt ist, dass keine plötzlichen Sprünge des Durchflussvolumens oder Ähnliches zu erwarten sind. Sind beispielsweise zwei Schwingungsmoden nutzbar, von denen eine eine höhere Phasengeschwindigkeit als die andere aufweist, so führt die Nutzung der Schwingungsmode mit der höheren Phasengeschwindigkeit zu einem kleineren Laufzeitunterschied $\Delta T$ als die Nutzung der Schwingungsmode mit der niedrigeren Phasengeschwindigkeit. Es ist also beispielsweise möglich, die Schwingungsmode mit der niedrigeren Phasengeschwindigkeit zu nutzen, wenn die zu erwartenden Durchflussvolumen bzw. Strömungsgeschwindigkeiten ausreichend klein sind, so dass sichergestellt ist, dass der Laufzeitunterschied $\Delta T$ kleiner ist als die Schwingungsperiode $T$. Werden hingegen größere Durchflüsse erwartet, kann stattdessen die Schwingungsmode mit der höheren Phasengeschwindigkeit genutzt werden. Die daraus resultierende Reduktion des Laufzeitunterschieds $\Delta T$ kann zwar zu einer Verringerung der Messgenauigkeit führen, es werden hierdurch jedoch größere Messbereiche zugänglich, in denen eine eindeutige Bestimmung des Durchflussvolumens möglich ist. Dadurch, dass die erste Schwingungsmode in Abhängigkeit eines Prognosewertes gewählt wird, kann eine Messeinrichtung somit mit geringem technischem Aufwand an eine Messaufgabe angepasst werden.

Soll jedoch eine optimale Messgenauigkeit erreicht werden, kann stets oder nur bei Erfüllung der Ermittlungsbedingung, also in Situationen, in denen dies zweckmäßig ist, der Phasenversatz sowohl für die erste Schwingungsmode als auch für eine zweite Schwingungsmode erfasst werden und die Fluidgröße kann in Abhängigkeit beider Phasenversätze ermittelt werden. Hierdurch kann einerseits durch Berücksichtigung der Schwingungsmode mit der geringeren Phasengeschwindigkeit ein großer Laufzeitunterschied und somit eine hohe Messgenauigkeit erreicht werden. Andererseits werden die bei Nutzung dieser Mode potentiell auftretenden Uneindeutigkeiten dadurch behoben, dass zusätzlich der Phasenversatz für die Schwingungsmode mit der höheren Phasengeschwindigkeit berücksichtigt wird. Werden beide Phasenversätze mit ausreichend geringem zeitlichen Abstand ermittelt, so kann davon ausgegangen werden, dass der Volumenfluss $Q$ während beiden Messintervallen gleich ist. Somit resultieren zwei Gleichungen, die für die jeweilige Messung einen Zusammenhang zwischen dem Volumendurchfluss $Q$ und dem gemessenen Phasenversatz $\Delta\varphi_m$ beschreiben. Hieraus resultiert ein definierter Zusammenhang zwischen den Werten der Variable $a$ in der obigen Gleichung für die verschiedenen Messungen. Da $a$ ganzzahlig sein muss, hebt dies die Mehrdeutigkeit des Zusammenhangs zwischen gemessenem Phasenversatz und Durchflussvolumen über einen großen Messbereich auf.

Die Seitenwand kann in Umfangsrichtung des Messrohrs mehrere zueinander gewinkelte Seitenwandabschnitte aufweisen. Beispielsweise kann die Seitenwand eine Rechteckform aufweisen. Die Schwingungswandler können an dem gleichen oder an gegenüberliegenden Seitenwandabschnitten angeordnet sein.

Die Anregung der Messwelle durch den ersten bzw. zweiten Schwingungswandler erfolgt vorzugsweise für die Erfassung des Phasenversatzes für die erste Schwingungsmode und für die Erfassung des Phasenversatzes für die zweite Schwingungsmode mit der gleichen Frequenz. Insbesondere werden Lamb-Wellen mit gleicher Frequenz, jedoch mit unterschiedlicher Schwingungsmode angeregt. Die Anregungsfrequenz kann so gewählt werden, dass genau zwei Schwingungsmoden einer Lamb-Welle in der Seitenwand anregbar sind, insbesondere die niedrigste antisymmetrische und die niedrigste symmetrische Lamb-Mode.

Eine vorgegebene Beziehung kann jedem Paar aus einem ersten und zweiten Phasenversatz eine Fluidgröße zuordnen oder die Fluidgröße kann in Abhängigkeit eines Zwischenergebnisses ermittelt werden, wobei eine vorgegebene Beziehung jedem Paar aus erstem und zweitem Phasenversatz ein Zwischenergebnis zuordnet. Die vorgegebene Beziehung kann beispielsweise eine Gleichung bzw. ein Gleichungssystem sein. Beispielsweise kann das obig beschriebene Gleichungssystem unter der Bedingung, dass $a$ einen bestimmten Wert nicht überschreitet, eindeutig gelöst werden, so dass bis zu einem bestimmten maximalen Volumenfluss jedem Paar der Phasenversätze ein Volumenfluss eindeutig zugeordnet werden kann. Alternativ können beispielsweise mehrdimensionale Look-up-Tabellen, insbesondere mit einer Interpolation, oder Ähnliches genutzt werden.

Erfindungsgemäß wird die Fluidgröße in Abhängigkeit beider Phasenversätze berechnet, wenn die Fluidgröße oder ein Zwischenergebnis, aus dem die Fluidgröße berechnet wird, berechnet wird, indem zu dem ersten Phasenversatz oder einem aus dem ersten Phasenversatz berechneten Rechenwert ein Offset addiert wird, wenn der zweite Phasenversatz einen vorgegebenen Grenzwert überschreitet oder umgekehrt. Aus der resultierenden Summe kann anschließend das Zwischenergebnis bzw. die Fluidgröße berechnet werden. Beispielsweise kann der erste Phasenversatz für eine Schwingungsmode mit relativ kleiner Phasengeschwindigkeit ermittelt werden, so dass eine hohe Messgenauigkeit resultiert. Resultiert in diesem Fall jedoch ein Phasenversatz von mehr als 360°, so ist dieser nicht direkt ermittelbar, so dass beispielsweise bei einem tatsächlichen Phasenversatz von 400° ein Phasenversatz von 40° gemessen werden kann. Wird nun der zweite Phasenversatz für eine Schwingungsmode mit deutlich größerer Phasengeschwindigkeit ermittelt, kann bei dem gleichen Durchfluss der zweite Phasenversatz erheblich kleiner, also beispielsweise nur 200°, sein. Da ein Phasenversatz von 200° noch eindeutig gemessen werden kann, kann anhand des zweiten Phasenversatzes erkannt werden, dass der Laufzeitunterschied so groß ist, dass der tatsächliche erste Phasenversatz größer als 360° sein muss. Somit kann zu dem gemessenen ersten Phasenversatz ein Offset von 360° addiert werden, um den tatsächlichen Phasenversatz zu ermitteln.

Der erste bzw. zweite Phasenversatz kann auf unterschiedliche Weise ermittelt werden. Beispielsweise können die Empfangssignale jeweils für beide Ausbreitungsrichtungen der Messwelle für ein gewisses Zeitintervall aufgenommen werden und durch eine Korrelation zwischen diesen Messpuffern kann der Phasenversatz bestimmt werden. Alternativ wäre es beispielsweise möglich, ausschließlich Nulldurchgänge mit steigenden oder fallenden Flanken zu erkennen oder Ähnliches.

Die Erfüllung der Ermittlungsbedingung kann von Phasenversätzen für die erste Schwingungsmode abhängen, die zu zumindest zwei verschiedenen Zeitpunkten erfasst werden. Beispielsweise kann die Ermittlungsbedingung erfüllt sein, wenn sich der Phasenversatz sprunghaft ändert, also beispielsweise eine Änderung des Phasenversatzes zwischen zwei Messungen einen Grenzwert überschreitet. Dies weist entweder auf eine schlagartige Änderung der Messbedingungen, also insbesondere auf eine schlagartige Änderung des Durchflussvolumens, hin, oder auf einen Phasenüberlauf, also darauf, dass beispielsweise der Phasenversatz etwas mehr als 360° ist und aufgrund der Einschränkung des Messbereichs auf 360° als sehr kleiner Phasenversatz erfasst wird. Durch eine zusätzliche Ermittlung des Phasenversatzes für die zweite Schwingungsmode kann typischerweise zwischen diesen beiden Fällen unterschieden werden.

Ist beispielsweise bekannt, dass sich die Messbedingungen, also beispielsweise die auftretenden Durchflussvolumen, nur relativ langsam ändern, kann es auch ausreichend sein, nur den aktuellen Phasenversatz zu berücksichtigen, um zu ermitteln, ob die Ermittlungsbedingung erfüllt ist. Beispielsweise kann die Ermittlungsbedingung erfüllt sein, wenn der ermittelte erste Phasenversatz einen ersten Grenzwert unterschreitet und/oder einen zweiten Grenzwert überschreitet. Beispielsweise kann sie bei einem Phasenversatz von weniger als 20° und bei einem Phasenversatz von mehr als 340° erfüllt sein, da es in diesen Bereichen bereits bei relativ geringen Flussänderungen zu einem Phasensprung des erfassten Phasenversatzes kommen kann.

Die Ermittlung des Empfangssignals für die zweite Schwingungsmode kann jeweils in einem Erfassungszeitfenster erfolgen, wobei der Anfangszeitpunkt des Erfassungszeitfensters in Abhängigkeit des Phasenversatzes für die erste Schwingungsmode ermittelt wird. Beispielsweise kann das Empfangssignal nur für eine Zeitperiode erfasst werden, die einer oder einigen Schwingungsperioden entspricht. Erfolgt auch die Anregung der Messwelle nur für ein bestimmtes Zeitintervall, so könnten sehr lange oder sehr kurze Laufzeiten dazu führen, dass nicht während des gesamten Erfassungszeitfensters eine Erfassung der Messwelle erfolgt. Dies kann beispielsweise durch Ermittlung des ersten Phasenversatzes erkannt werden.

Die Ermittlung eines Phasenversatzes für eine bestimmte Schwingungsmode bzw. für zwei verschiedene Schwingungsmoden kann insbesondere dadurch erfolgen, dass bei der Ermittlung des Phasenversatzes für eine jeweilige Schwingungsmode der Schwingungswandler zur modenselektiven Anregung dieser Schwingungsmode angesteuert wird. Unter einer modenselektiven Anregung ist hierbei insbesondere eine modenreine bzw. im Wesentlichen modenreine Anregung zu verstehen. Insbesondere kann bei einer modenselektiven Anregung der ersten Schwingungsmode die Amplitude dieser Mode um wenigstens den Faktor 3 oder 10 oder 100 oder vorzugsweise um einen erheblich größeren Faktor größer sein als die Amplitude der zweiten Schwingungsmode bzw. aller anderen angeregten Schwingungsmoden und umgekehrt. Die Anregung der ersten Schwingungsmode und die Anregung der zweiten Schwingungsmode erfolgt vorzugsweise in voneinander unterschiedlichen, vorzugsweise beabstandeten, Zeitintervallen.

Der erste und/oder der zweite Schwingungswandler können mehrere Schwingelemente umfassen, die in voneinander beabstandeten Kopplungsbereichen mit der Seitenwand des Messrohrs gekoppelt sind und durch die jeweils zur Ermittlung des ersten Phasenversatzes für die erste Schwingungsmode und/oder des zweiten Phasenversatzes für die zweite Schwingungsmode in dem jeweiligen Kopplungsbereich eine in der Seitenwand geführte Teilwelle derart angeregt wird, dass bei der Überlagerung der Teilwellen zu der jeweiligen Messwelle die jeweils andere Schwingungsmode durch eine destruktive Interferenz der Teilwellen zumindest teilweise ausgelöscht wird. Hierdurch kann die obig beschriebene modenselektive Anregung implementiert werden. Insbesondere kann bei der Ermittlung des ersten Phasenversatzes für die erste Schwingungsmode eine konstruktive Interferenz und für die zweite Schwingungsmode eine destruktive Interferenz resultieren und für die Ermittlung des zweiten Phasenversatzes für die zweite Schwingungsmode eine konstruktive Interferenz und für die erste Schwingungsmode eine destruktive Interferenz. Die destruktive Interferenz kann im Wesentlichen eine vollständig destruktive Interferenz sein. Beispielsweise kann die Amplitude der destruktiv interferierenden Schwingungsmode der Messwelle wenigstens um den Faktor 5 oder 10 oder 50 kleiner sein als die Amplitude der anderen Schwingungsmode.

Die Schwingelemente können direkt oder über wenigstens ein Kopplungselement oder eine Kopplungsschicht mit dem jeweiligen Kopplungsbereich gekoppelt sein.

Zur modenselektiven Anregung der ersten und/oder zweiten Schwingungsmode kann ein erstes und ein zweites der Schwingelemente derart angesteuert werden, dass der zeitliche Verlauf der Schwingungsamplitude des zweiten Schwingelements dem um eine Verzögerungszeit verzögerten zeitlichen Verlauf der Schwingungsamplitude des ersten Schwingelements entspricht. Dies kann dazu genutzt werden, durch eine entsprechende Wahl der geometrischen Anordnung, insbesondere des Abstands, der Schwingelemente bzw. der Kopplungsbereiche und der genutzten Anregungsphase gezielt bestimmte Schwingungsmoden zu verstärken bzw. zu bedämpfen, wodurch eine gute Modenreinheit der geführten Welle erreicht werden kann. Aufgrund der endlichen Ausbreitungsgeschwindigkeit der geführten Welle bzw. der einzelnen Schwingungsmoden der geführten Welle ist der Amplitudenverlauf einer durch das erste Schwingelement angeregten Teilwelle an der Position des zweiten Schwingelements gegenüber dem Amplitudenverlauf der Anregung zeitlich verzögert und umgekehrt. Werden die gleichen Amplitudenverläufe am ersten und zweiten Schwingelement genutzt, kann dies daher dazu führen, dass die durch das erste und zweite Schwingelement angeregten Teilwellen mit voneinander unterschiedlichen Amplituden überlagert werden, wobei das Überlagerungsverhältnis zeitabhängig ist. Dies kann die Modenreinheit der Anregung beeinträchtigen. Dies kann durch das beschriebene Vorgehen vermieden werden.

Die beschriebene zeitliche Verzögerung kann beispielsweise dadurch realisiert werden, dass ein gemeinsames Ansteuersignal für beide Schwingelemente bereitgestellt wird, das jedoch vor der Zuführung zum zweiten Schwingelement um die Verzögerungszeit verzögert wird. Die Verzögerungszeit kann insbesondere der Laufzeit der jeweils zu bedämpfenden Schwingungsmode zwischen den Schwingelementen entsprechen, wobei durch Invertierung des Ansteuersignals, eine Montage des zweiten Schwingelements an der Seitenwand mit umgekehrter Polarität, eine unterschiedliche Beschaltung der Elektroden der Schwingelemente oder Ähnliches eine umgekehrte Polarität der Schwingung realisiert wird. Dies führt zu einer näherungsweise optimalen Bedämpfung der zu bedämpfenden Schwingungsmode. Durch Wahl der Verzögerungszeit kann gewählt werden, welche der Schwingungsmoden bedämpft werden soll. Somit ist zur Ermittlung des ersten Phasenversatzes und des zweiten Phasenversatzes insbesondere ausschließlich eine Nutzung einer unterschiedlichen Verzögerungszeit erforderlich.

Die Anregung der Schwingelemente kann derart erfolgen, dass die Schwingungsmuster eines ersten und eines zweiten der Schwingelemente einander mit einer vorgegebenen relativen Polarität und/oder einem vorgegebenen relativen Phasenversatz entsprechen, wobei sich die zur modenselektiven Anregung der ersten Schwingungsmode und zur modenselektiven Anregung der zweiten Schwingungsmode genutzten vorgegebenen relativen Polaritäten und/oder Phasenversätze voneinander unterscheiden. Dieses Vorgehen kann beispielsweise mit der vorangehend erläuterten Anpassung der Amplituden aneinander kombiniert werden, wenn z. B. für die einzelnen Schwingelemente separate Ansteuersignale generiert werden. Andererseits kann das beschriebene Vorgehen auch genutzt werden, um eine Modenselektivität mit besonders einfachen technischen Mitteln zu realisieren.

In einem einfachen Ausführungsbeispiel kann die Anregungsfrequenz zur Anregung der Messwelle beispielsweise so gewählt werden, dass nur genau zwei Schwingungsmoden einer geführten Lamb-Welle angeregt werden können, wobei eine erste Schwingungsmode genau die halbe Wellenlänge einer zweiten Schwingungsmode aufweist. Wird nun der Abstand der Mitten der Schwingelemente bzw. der Kopplungsbereiche so gewählt, dass er der Wellenlänge der ersten Schwingungsmode entspricht, so erfolgt bei einer Anregung mit gleicher Polarität und gleicher Phase eine konstruktive Interferenz für die erste Schwingungsmode und eine destruktive Interferenz für die zweite Schwingungsmode. Wird hingegen die Polarität der Schwingung eines der Schwingelemente umgekehrt oder erreicht, dass dieses mit einem Phasenversatz von 180° schwingt, resultiert eine destruktive Interferenz für die erste Schwingungsmode und eine konstruktive Interferenz für die zweite Schwingungsmode. Ein Polaritätswechsel kann beispielsweise dadurch realisiert werden, dass ein Anregungssignal invertiert wird oder dass eine Beschaltung von Elektroden eines Schwingelements geändert wird.

Eine Modenselektivität der Messung, also eine Wahl, ob ein Phasenversatz für die erste oder die zweite Schwingungsmode ermittelt wird, kann alternativ dadurch realisiert werden bzw. dadurch weiter verbessert werden, dass der jeweils zum Empfang genutzte Schwingungswandler derart beschaltet bzw. ausgelesen wird, dass eine modenselektive bzw. weitgehend modenreine Erfassung von Messsignalen ausschließlich einer der Schwingungsmoden erfolgen kann.

In einer vorteilhaften Ausgestaltung kann der erste und/oder der zweite Schwingungswandler die mehreren oder mehrere Schwingelemente umfassen, die in voneinander beabstandeten Kopplungsbereichen mit der Seitenwand des Messrohrs gekoppelt sind, wobei zur Erfassung der jeweiligen Empfangssignale zur Ermittlung des ersten Phasenversatzes für die erste Schwingungsmode und/oder des zweiten Phasenversatzes für die zweite Schwingungsmode Teilsignale der einzelnen Schwingelemente derart überlagert werden, dass durch die jeweils andere Schwingungsmode verursachte Teilsignale zumindest teilweise ausgelöscht werden. Die Überlagerung kann beispielsweise durch ein analoges Subtrahieren oder Addieren der Empfangssignale der einzelnen Schwingelemente erfolgen. Alternativ können die Signale der einzelnen Schwingelemente separat digitalisiert und die digitalen Daten entsprechend weiterverarbeitet werden. Dies ist insbesondere vorteilhaft, wenn, wie später erläutert werden wird, eine Phasenverschiebung der Empfangssignale zueinander erfolgen soll, da dies digital mit geringem Aufwand möglich ist.

Die jeweiligen Teilsignale können zur Ermittlung des ersten Phasenversatzes zueinander addiert und zur Ermittlung des zweiten Phasenversatzes voneinander subtrahiert werden oder umgekehrt. Beispielsweise können die Abstände der Kopplungsbereiche bzw. der Schwingelemente und die Wellenlängen der beiden Schwingungsmoden wie obig erläutert gewählt werden, um eine weitgehend optimale konstruktive Interferenz für jeweils eine Schwingungsmode und eine weitgehend optimale destruktive Interferenz für die andere Schwingungsmode zu erreichen.

Zur Ermittlung des Messsignals können Teilsignale eines ersten der Schwingelemente und um eine Verzögerungszeit verzögerte Teilsignale eines zweiten der Schwingelemente zueinander addiert oder voneinander subtrahiert werden, wobei zur Ermittlung der Empfangssignale für die erste und zweite Schwingungsmode voneinander unterschiedliche Verzögerungszeiten verwendet werden. Durch eine entsprechende Wahl der Verzögerungszeit kann, wie obig bezüglich der Anregung der Messwelle erläutert, eine konstruktive Interferenz für eine der beiden Schwingungsmoden und eine destruktive Interferenz für die andere Schwingungsmode erreicht werden, so dass eine empfangsseitige Modenselektivität erreicht wird.

Die Schwingelemente bzw. Kopplungsbereiche können beispielsweise rechteckig und parallel zueinander sein, um eine im Wesentlichen ebene Welle anzuregen bzw. zu erfassen. Es ist jedoch auch möglich, dass die Schwingelemente bzw. Kopplungsbereiche gekrümmt sind und beispielsweise Kreissegmente ausbilden. Hierbei verlaufen die Kopplungsbereiche bzw. Schwingelemente eines jeweiligen Schwingungswandlers vorzugsweise parallel zueinander und weisen insbesondere einen konstanten Abstand zwischen den Schwingelementen bzw. Kopplungsbereichen auf. Unter einem Abstand von Kopplungsbereichen bzw. Schwingelementen zueinander wird hierbei insbesondere der Abstand der Mitten bzw. Mittellinien senkrecht zur Ausbreitungsrichtung der jeweiligen Messwelle verstanden.

Die Schwingelemente können piezoelektrische Schwingungswandler sein. Vorzugsweise werden relativ einfache Elektrodenstrukturen genutzt. Beispielsweise können nur zwei gegenüberliegende Elektroden vorgesehen sein, wobei eine dieser Elektroden oder beide Elektroden zur leichteren Kontaktierung abschnittsweise um das jeweilige Schwingelement herumgeführt sein können und/oder als Blechelektrode von dem Schwingelement abstehen können. Vorzugsweise wird eine Dickenschwingung des Schwingelements senkrecht zur Seitenwand des Messrohrs angeregt.

Neben dem erfindungsgemäßen Verfahren betrifft die Erfindung eine Messeinrichtung, insbesondere einen Durchflussmesser, mit einem Messrohr, das zur Aufnahme oder zur Führung eines Fluids dient, einem an einer Seitenwand des Messrohrs angeordneten ersten und zweiten Schwingungswandler und einer Steuereinrichtung, wobei die Steuereinrichtung zur Durchführung des vorangehend erläuterten Verfahrens eingerichtet ist. Die erfindungsgemäße Messeinrichtung kann mit den zum erfindungsgemäßen Verfahren erläuterten Merkmalen mit den dort genannten Vorteilen weitergebildet werden.

Weitere Vorteile und Einzelheiten der Erfindung ergeben sich aus den im Folgenden beschriebenen Ausführungsbeispielen und den zugehörigen Zeichnungen. Hierbei zeigen schematisch:

Fig. 1 und 2    verschiedene Ansichten eines Ausführungsbeispiels einer erfindungsgemäßen Messeinrichtung, durch die ein Ausführungsbeispiel des erfindungsgemäßen Verfahrens ausführbar ist, und

Fig. 3    ein Ablaufdiagramm eines Ausführungsbeispiels des erfindungsgemäßen Verfahrens.

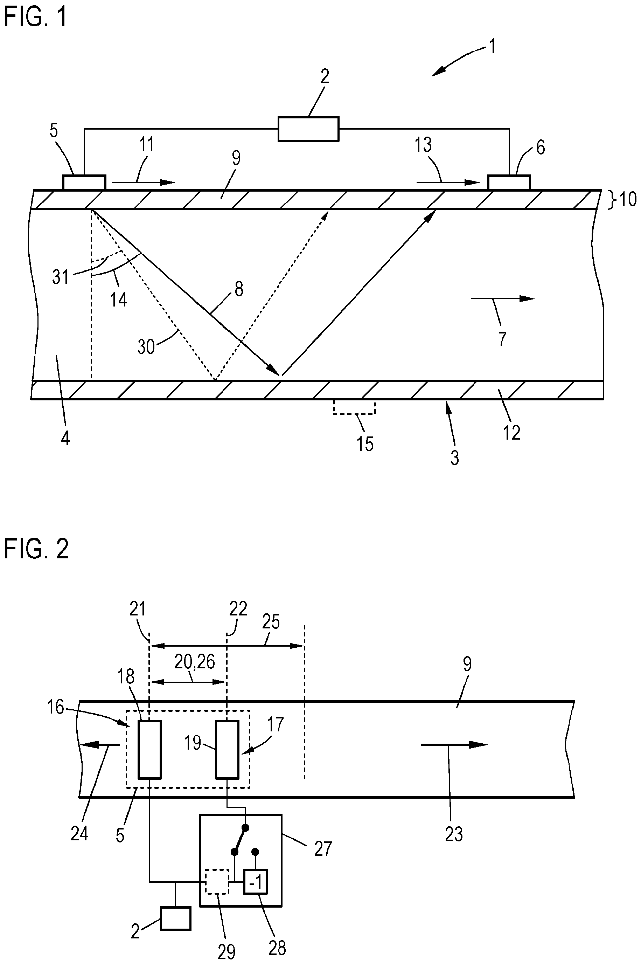

Fig. 1 zeigt eine Messeinrichtung 1 zur Ermittlung einer ein Fluid und/oder eine Fluidströmung des Fluids betreffenden Fluidgröße, insbesondere eines Durchflussvolumens. Das Fluid wird in eine durch den Pfeil 7 gezeigte Richtung durch den Innenraum 4 des Messrohrs geführt. Um die Fluidgröße, insbesondere das Durchflussvolumen, zu ermitteln, kann die Steuereinrichtung 2 eine Laufzeitdifferenz zwischen den Laufzeiten von einem ersten Schwingungswandler 5 zu einem zweiten Schwingungswandler 6 und umgekehrt ermitteln. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Prinzipiell wäre es möglich, die Laufzeiten bzw. Laufzeitdifferenzen zu ermitteln, indem eine pulsartige Anregung erfolgt und beispielsweise die Zeit bis zum Einlauf des Schwingungspulses direkt gemessen wird. Eine höhere Messgenauigkeit kann jedoch erreicht werden, wenn stattdessen ein Phasenversatz zwischen den für die unterschiedlichen Messrichtungen am jeweils empfangenden Schwingungswandler 5, 6 erfassten Empfangssignalen ermittelt wird. Beispielsweise kann unmittelbar oder nach einem gewissen Zeitversatz nach Beginn der Anregung der geführten Messwelle durch den Schwingungswandler 5 mit einer Aufzeichnung des Empfangssignals am Schwingungswandler 6 begonnen werden und umgekehrt. Durch Korrelation der Empfangssignale zwischen den Ausbreitungsrichtungen kann ein Phasenversatz bestimmt werden, der über die Anregungsfrequenz mit dem Laufzeitunterschied in Zusammenhang steht.

Problematisch an einer Erfassung eines Laufzeitunterschieds bzw. Durchflusses anhand eines Phasenversatzes ist es, dass eine Verschiebung der Phasenlage um 360° jeweils zu identischen Messungen führt. Kann somit eine große Spannbreite von Phasenversätzen zwischen den Messrichtungen auftreten, beispielsweise, wenn eine Durchflussmessung über einen großen Bereich von sehr kleinen bis zu sehr großen Durchflussvolumen erfolgen soll, kann der ermittelte Phasenversatz somit mehrdeutig sein. Um dem entgegenzuwirken werden in der Messeinrichtung 1 in der Seitenwand 9 geführte Messwellen genutzt, wobei eine modenselektive bzw. vorzugsweise im Wesentlichen modenreine Anregung und/oder Messung erfolgt, womit unterschiedliche Ausbreitungspfade der Ultraschallstrahlen 8, 30 für unterschiedliche Schwingungsmoden, die mit der gleichen Anregungsfrequenz angeregt werden können, resultieren. Dies kann dazu genutzt werden, die oben genannte Uneindeutigkeit des Phasenversatzes zumindest weitgehend zu beheben, so dass ein nutzbarer Messbereich erheblich erweitert werden kann.

Die Ultraschallstrahlen 8, 30 werden nicht direkt in das Fluid eingekoppelt. Stattdessen wird durch den Schwingungswandler 5 bzw. 6 eine Messwelle in der Seitenwand 9 des Messrohrs 3 angeregt. Die Anregung erfolgt mit einer Frequenz, die derart gewählt ist, dass eine Lamb-Welle in der Seitenwand 9 angeregt wird. Solche Wellen können angeregt werden, wenn die Dicke 10 der Seitenwand vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte Welle ist schematisch durch den Pfeil 11 dargestellt. Durch die geführten Wellen werden Kompressionsschwingungen des Fluids angeregt, die im gesamten Ausbreitungspfad der geführten Welle in das Fluid abgestrahlt werden. Die Abstrahlung erfolgt hierbei unter dem Rayleigh-Winkel 14, 31, der für unterschiedliche Schwingungsmoden unterschiedlich ist, da er von dem Verhältnis der Schallgeschwindigkeit im Fluid und der Phasengeschwindigkeit der geführten Wellen in der Seitenwand 9 abhängt. Erfolgt somit eine modenselektive Anregung bzw. Messung, kann gezielt der Phasenversatz für unterschiedliche Pfade der Ultraschallwelle ermittelt werden. Zudem ermöglicht es die indirekte Anregung der Druckwellen im Fluid über geführte Wellen, dass die Schwingungswandler 5,6 außerhalb des Messrohrs 3 angeordnet werden können und dass zudem eine Abstrahlung der Druckwellen über einen ausgedehnten Bereich in Längsrichtung des Messrohrs erfolgen kann, was den Einfluss des Strömungsprofils auf die Messung reduziert.

Die abgestrahlten Ultraschallstrahlen 8, 30 werden an dem gegenüberliegenden Wandabschnitt 12 der Seitenwand 9 reflektiert und zurück zu dem Wandabschnitt der Seitenwand 9 geführt, an dem die Schwingungswandler 5, 6 angeordnet sind. Dort regen sie eine weitere geführte Welle an, die schematisch durch den Pfeil 13 dargestellt ist und durch den Schwingungswandler 6 erfasst wird. Im gezeigten Beispiel werden die Ultraschallstrahlen 8, 30 auf ihrem Pfad zum Schwingungswandler 6 nur einmal reflektiert. Es wäre selbstverständlich möglich, eine längere Messstrecke zu nutzen, wobei die Ultraschallstrahlen 8, 30 mehrfach an der Seitenwand reflektiert werden. Alternativ wäre es beispielsweise auch möglich, einen Schwingungswandler 15 am gegenüberliegenden Wandabschnitt 12 zu nutzen, so dass eine Messung ohne jegliche Reflexionen erfolgen kann.

Werden Lamb-Wellen in der Seitenwand 9 angeregt, können bei jeder Anregungsfrequenz zumindest zwei Schwingungsmoden angeregt werden. Vorzugsweise werden relativ niedrige Anregungsfrequenzen genutzt, so dass nur genau eine antisymmetrische und genau eine symmetrische Schwingungsmode angeregt werden können. Aufgrund der unterschiedlichen Phasengeschwindigkeiten dieser Schwingungsmoden und somit der unterschiedlichen Rayleigh-Winkel 14, 31 resultiert hierbei für jene Schwingungsmode mit der höheren Phasengeschwindigkeit ein geringerer Laufzeitunterschied und somit auch ein geringerer tatsächlicher Phasenversatz zwischen den Messrichtungen.

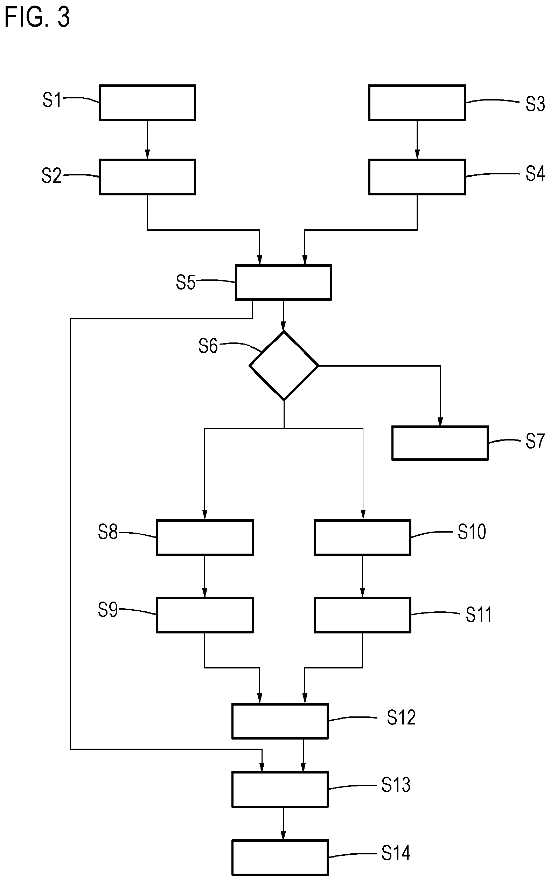

Im einfachsten Fall kann dies dazu genutzt werden, die Messeinrichtung 1 bedarfsgerecht beispielsweise für Anwendungen mit erwarteten höheren oder niedrigeren Durchflüssen zu konfigurieren. Hierbei kann nur eine Schwingungsmode zur Messung genutzt werden, wobei beispielsweise für geringe erwartete Durchflüsse ein geringer Laufzeitunterschied erwartet wird, womit die Schwingungsmode mit der geringeren Phasengeschwindigkeit genutzt werden kann, um eine höhere Messgenauigkeit zu erreichen. Andererseits kann bei höheren zu erwartenden Durchflüssen die Schwingungsmode mit der höheren Phasengeschwindigkeit genutzt werden, wodurch beispielsweise erreicht werden kann, dass über einen größeren Messbereich eine Uneindeutigkeit des Phasenversatzes vermieden werden kann. Wie später noch genauer mit Bezug auf Fig. 3 erläutert werden wird, kann es jedoch auch vorteilhaft sein, stets oder bedarfsgerecht Phasenversätze für beide Schwingungsmoden zu ermitteln, um zugleich einen großen Messbereich und eine hohe Messgenauigkeit zu erreichen.

Fig. 2 zeigt beispielhaft den Aufbau des Schwingungswandlers 5, durch den eine im Wesentlichen modenreine Anregung bzw. eine modenselektive Erfassung einer in der Wand 9 geführten Messwelle möglich ist, wobei wahlweise verschiedene Schwingungsmoden angeregt bzw. erfasst werden können. Der Schwingungswandler 5 umfasst zwei Schwingelemente 18, 19, die in voneinander beabstandeten Kopplungsbereichen 16, 17 mit der Seitenwand 9 des Messrohrs 3 gekoppelt sind. Die Schwingelemente 18, 19 können beispielsweise piezoelektrische Elemente, beispielsweise Piezokeramiken, mit entsprechend daran angeordneten Elektroden sein. Werden die Schwingelemente 18, 19 jeweils mit einem Anregungssignal gleicher Frequenz angesteuert, so werden in den Kopplungsbereichen 16, 17 jeweilige Teilwellen angeregt, die sich zu der Messwelle überlagern. Als Teilwellen werden hierbei Lamb-Wellen angeregt, wobei hierbei mehrere, insbesondere genau zwei, Schwingungsmoden mit ähnlicher oder gleicher Amplitude angeregt werden. Da die Schwingelemente 18, 19 im Wesentlichen rechteckförmig sind und im gesamten Kopplungsbereich 16, 17 mit der Wand gekoppelt sind, werden als Teilwellen im Wesentlichen ebene Wellen angeregt, die durch die Wand 9 in die Ausbreitungsrichtungen 23, 24 geführt werden. In nicht gezeigten alternativen Ausführungsbeispielen wäre es auch möglich, gekrümmte Schwingelemente 18, 19 bzw. Kopplungsbereiche 16, 17 zu nutzen, die im Wesentlichen parallel verlaufen, um beispielsweise gezielt gekrümmte oder rotationssymmetrische Wellenfronten zu erzeugen.

Um eine modenreine Anregung zu realisieren, sind der Abstand 20 zwischen den Mitten 21, 22 der Kopplungsbereiche 16, 17, eine durch die Steuereinrichtung 2 vorgegebene Anregungsfrequenz und die relative Phasenlage bzw. Polarität der Anregung derart gewählt, dass eine zu dämpfende Schwingungsmode der Teilwellen durch eine destruktive Interferenz in die Ausbreitungsrichtungen 23, 24 im Wesentlichen ausgelöscht wird. Eine einfache Möglichkeit, dies zu erreichen, ist es, die Anregungsfrequenz so zu wählen, dass die Wellenlänge 25 der zu dämpfenden Schwingungsmode gemäß der Dispersionsrelation der Seitenwand 9 bei der gewählten Anregungsfrequenz doppelt so groß ist wie der Abstand zwischen den Mitten 21, 22 der Kopplungsbereiche. Da die Schwingelemente 18, 19 im Wesentlichen gleich aufgebaut sind und durch die Steuereinrichtung 2 mit einem gemeinsamen Ansteuersignal angesteuert werden, resultiert eine destruktive Interferenz der Teilwellen bezüglich der zu dämpfenden Schwingungsmode, womit diese im Wesentlichen vollständig unterdrückt wird. Wird nun die Anregungsfrequenz derart gewählt, dass ausschließlich die zu dämpfende und eine einzige weitere Schwingungsmode angeregt werden, was bei einer bekannten Dispersionsrelation der Seitenwand 9 problemlos möglich ist, so kann eine im Wesentlichen modenreine Anregung der weiteren Schwingungsmode realisiert werden.

Im gezeigten Ausführungsbeispiel ist die Anregungsfrequenz so gewählt, dass die Wellenlänge 26 der weiteren angeregten Schwingungsmode genau halb so lang ist wie die Wellenlänge 25 der zu dämpfenden Schwingungsmode. Hierdurch wird der Vorteil erreicht, dass die in den Kopplungsbereichen 16, 17 angeregten Teilwellen bezüglich der weiteren Schwingungsmode konstruktiv interferieren, wodurch diese Schwingungsmode mit einer großen Amplitude bereitgestellt wird.

Um eine modenselektive bzw. im Wesentlichen modenreine Anregung auch für eine zweite Schwingungsmode zu ermöglichen, wird eine Schalteinrichtung 27 genutzt, die in Fig. 2 als separate Komponente dargestellt ist, jedoch auch in die Steuereinrichtung 2 oder in den Schwingungswandler 5 integriert sein kann. Im gezeigten Ausführungsbeispiel erfolgt ein Umschalten zwischen einem Eingangssignal und einem durch eine Inverterschaltung 28 invertierten Signal. Statt der Nutzung einer Inverterschaltung 28 wäre es beispielsweise möglich, die Verschaltung der Elektroden des Schwingelements 19 mit der Steuereinrichtung 2 zu ändern, um die angeregte Mode zu wechseln. Durch das Invertieren der Beschaltung bzw. des Ansteuersignals schwingt das Schwingelement 19 mit einem Schwingmuster, das eine zum Schwingmuster des Schwingelements 18 umgekehrte Polarität aufweist. Dies führt dazu, dass für die erste Schwingungsmode mit der Wellenlänge 26 eine destruktive Interferenz und für die zweite Schwingungsmode mit der Wellenlänge 25 eine konstruktive Interferenz resultiert, womit eine modenselektive bzw. modenreine Anregung für die zweite Schwingungsmode erfolgt.

Die Modenreinheit kann für die Ausbreitungsrichtung 23 weiter verbessert werden, wenn sichergestellt wird, dass der zeitliche Verlauf der Schwingungsamplitude des zweiten Schwingelements 19 dem um eine Verzögerungszeit verzögerten zeitlichen Verlauf der Schwingungsamplitude des ersten Schwingelements 18 entspricht, wobei die Verzögerungszeit der Laufzeit der zu dämpfenden Schwingungsmode von dem ersten Schwingelement 18 zu dem zweiten Schwingelement 19 entspricht. Wird dies nicht sichergestellt, so kann es insbesondere zu Beginn bzw. zum Ende eines Anregungspulses hin zu einer gewissen Modenunreinheit kommen, da aufgrund der Laufzeit zwischen den Schwingelementen 18, 19 und der endlichen Länge des Anregungspulses beispielsweise das Schwingelement 19 weiter schwingen würde, wenn die vom Schwingelement 18 ausgehende geführte Welle den Bereich dieses Schwingelements bereits passiert hätte.

Eine Möglichkeit, dies mit geringem Aufwand zu erreichen, ist es, zusätzlich das Verzögerungselement 29 vorzusehen, das das von der Steuereinrichtung 2 bereitgestellte Steuersignal um diese Verzögerungszeit verzögert. Insbesondere kann eine Verzögerung vor einer Digital-Analog-Wandlung vorgesehen sein, da diese besonders einfach zu implementieren ist. Wird nun die Verzögerungszeit so gewählt, dass sie der Laufzeit der zu bedämpfenden Schwingungsmode zwischen den Schwingungselementen 18, 19 entspricht, und erfolgt eine invertierte Ansteuerung des Schwingungselements 19, so kann unabhängig vom Abstand 20 zwischen den Mitten 21, 22 der Kopplungsbereiche 16, 17 sichergestellt werden, dass stets eine im Wesentlichen vollständig destruktive Interferenz für die zu bedämpfende Schwingungsmode für die Ausbreitungsrichtung 23 resultiert, womit eine im Wesentlichen modenreine bzw. modenselektive Anregung für die verbleibende Schwingungsmode resultiert. Die Wahl der zu bedämpfenden Schwingungsmode erfolgt durch Vorgabe der Verzögerungszeit.

Alternativ oder ergänzend zur vorangehend erläuterten senderseitigen Modenselektivität kann für den jeweils empfangenden Schwingungswandler 5, 6 eine empfangsseitige Modenselektivität realisiert werden. Hierbei können zur Erfassung der jeweiligen Empfangssignale zur Ermittlung des Phasenversatzes zwischen den Messrichtungen Teilsignale der einzelnen Schwingelemente 18, 19 derart überlagert werden, dass durch die jeweils andere Schwingungsmode verursachte Teilsignale zumindest teilweise ausgelöscht werden. Wird die oben beschriebene Anordnung genutzt, bei der die Abstände der Schwingelemente 18, 19 so gewählt ist, dass der Abstand der Wellenlänge der kürzerwelligen Schwingungsmoden entspricht, wobei die andere Schwingungsmode die doppelte Wellenlänge aufweist, kann ein modenselektiver Empfang der langwelligen Schwingungsmode erfolgen, indem die Teilsignale der einzelnen Schwingelemente 18, 19 voneinander subtrahiert werden, da hierbei eine destruktive Interferenz im resultierenden Empfangssignal für die kurzwellige Schwingungsmode resultiert und umgekehrt. Eine andere Art, ein Teilsignal einer bestimmten Schwingungsmode gezielt zu bedämpfen, ist es, eines der Teilsignale wie oben erläutert um eine Verzögerungszeit zu verzögern, die der Laufzeit der zu bedämpfenden Schwingungsmode zwischen den Schwingelementen 18, 19 entspricht, und die Teilsignale voneinander zu subtrahieren.

Fig. 3 zeigt ein Ablaufdiagramm eines Ausführungsbeispiels eines Verfahrens zur Ermittlung einer Fluidgröße durch eine Messeinrichtung. Das Verfahren kann beispielsweise durch die mit Bezug zu Fig. 1 und 2 diskutierte Messeinrichtung 1 umgesetzt werden.

In Schritt S1 wird zunächst durch die Steuereinrichtung 2 der Schwingungswandler 5 angesteuert, um eine in der Seitenwand 9 geführte Messwelle anzuregen. Die Anregung erfolgt hierbei, wie zur Fig. 2 erläutert, modenselektiv für eine erste Schwingungsmode.

In Schritt S2 werden innerhalb eines bestimmten Zeitintervalls nach Beginn der Anregung der Schwingung Empfangssignale über den Schwingungswandler 6 erfasst, wobei auch hierbei ein modenselektiver Empfang für die erste Schwingungsmode erfolgt, wie vorangehend mit Bezug auf Fig. 2 erläutert wurde.

In den Schritten S3 und S4 wird diese Messung für die umgekehrte Messrichtung wiederholt, das heißt, in Schritt S3 wird durch den Schwingungswandler 6 eine Messwelle angeregt und in Schritt S4 werden die zugeordneten Empfangssignale durch den Schwingungswandler 5 empfangen.

In Schritt S5 wird aus den in Schritt S2 und S4 ermittelten Empfangssignalen ein Phasenversatz für die erste Schwingungsmode ermittelt. Dies kann beispielsweise dadurch erfolgen, dass eine Korrelationsfunktion auf die digitalisierten Empfangssignale angewandt wird. Alternativ wäre es beispielsweise möglich, Zeitpunkte von Nulldurchgängen der Empfangssignale zu vergleichen oder Ähnliches.

In Schritt S6 wird eine Ermittlungsbedingung geprüft, das heißt es wird geprüft, ob es zweckmäßig ist, die Messung des Phasenversatzes für eine zweite Schwingungsmode zu wiederholen. Die erste Schwingungsmode kann beispielsweise eine von zwei bei der gleichen Frequenz anregbaren Schwingungsmoden sein, die gegenüber der anderen Schwingungsmode eine höhere Phasengeschwindigkeit in der Seitenwand 9 aufweist. Dies ermöglicht eine hohe Messgenauigkeit, kann jedoch bei starken Änderungen des Laufzeitunterschiedes bzw. des Phasenversatzes, beispielsweise, wenn sich die Durchflussmenge des Fluids stark ändert, dazu führen, dass der Phasenversatz springt, da er beispielsweise 360° überschreitet, womit das Messergebnis nicht eindeutig ist. Um dies zu erkennen, können insbesondere Phasenversätze für mindestens zwei verschiedene Zeitpunkte ausgewertet werden. Beispielsweise kann ein Unterschied zwischen dem aktuell ermittelten Phasenversatz und einem vorangehend ermittelten Phasenversatz für die erste Schwingungsmode mit einem Grenzwert verglichen werden, um Sprünge des Phasenversatzes aufgrund eines Phasenüberlaufs zu erkennen. Alternativ könnte beispielsweise die Ermittlungsbedingungen in Schritt S6 auch stets dann erfüllt sein, wenn ein sehr kleiner oder ein sehr großer Phasenversatz ermittelt wird, da sich der Phasenversatz in diesem Fall in der Nähe eines Phasensprungs befindet.

Ist die Ermittlungsbedingung in Schritt S6 nicht erfüllt, so kann in Schritt S7 unmittelbar aus dem Phasenversatz für die ersten Schwingungsmode die Fluidgröße berechnet werden.

In den Schritten S8 bis S12 wird die vorangehend mit Bezug auf die Schritte S1 bis S5 beschriebene Ermittlung eines Phasenversatzes für eine zweite Schwingungsmode wiederholt. Hierbei entsprechen die Schritte S8 und S10 den Schritten S1 und S3 mit dem Unterschied, dass die modenselektive Anregung für die zweite Schwingungsmode erfolgt. Die Schritte S9 und S11 entsprechen den Schritten S2 und S4, wobei die modenselektive Erfassung von Empfangssignalen für die zweite Schwingungsmode erfolgt. In Schritt S12 wird, wie zu Schritt S5 erläutert, ein Phasenversatz für diese zweite Messung und somit für die zweite Schwingungsmode bestimmt.

In Schritt S13 wird in Abhängigkeit der in den Schritten S5 und S12 ermittelten Phasenversätze für die erste und zweite Schwingungsmode ein Zwischenergebnis, beispielsweise ein Laufzeitunterschied oder ein korrigierter Phasenversatz für die erste Schwingungsmode ermittelt. Hierbei wird eine vorgegebene Beziehung genutzt, die jedem Paar aus ermittelten Phasenversätzen ein solches Zwischenergebnis zuordnet. Wie obig erläutert, kann unter der Annahme eines nicht allzu großen Laufzeitunterschieds ein Gleichungssystem aufgestellt werden, das eine eindeutige Berechnung der tatsächlichen Phasenversätze ermöglicht. Durch Lösung dieses Gleichungssystems kann eine Fluidgröße mit hoher Robustheit ermittelt werden. Ein derartiges Vorgehen ist relativ rechenaufwändig, kann jedoch vorteilhaft sein, wenn auch für große Laufzeitunterschiede, die größer sind als die Periode beider Schwingungsmoden, eine eindeutige Fluidgröße bestimmt werden soll. Hierbei ist es jedoch erforderlich, dass die Perioden der Schwingungsmoden kein ganzzahliges Vielfaches voneinander sind.

Häufig ist es jedoch einfacher, anhand des Phasenversatzes für die Schwingungsmode mit höherer Phasengeschwindigkeit in der Seitenwand 9 zunächst zu bestimmen, ob der Phasenversatz für die Schwingungsmode mit geringerer Phasengeschwindigkeit in der Seitenwand 9 innerhalb einer Schwingungsperiode liegt bzw. innerhalb welcher Schwingungsperiode dieser Phasenversatz liegt und anschließend innerhalb dieser Schwingungsperioden den genauen Phasenversatz bzw. die genaue Laufzeit anhand des Phasenversatzes für die Schwingungsmode mit geringerer Phasengeschwindigkeit zu bestimmen. Dies ist erfindungsgemäß besonders einfach implementiert, indem zu dem für eine der

Schwingungsmoden ermittelten Phasenversatz oder zu einem hieraus berechneten Rechenwert ein fester Offsetwert addiert wird, wenn der Phasenversatz für die andere Schwingungsmode einen vorgegebenen Grenzwert überschreitet.

In Schritt S14 kann anschließend, wie bereits zu Schritt S7 erläutert wurde, aus dem korrigierten Phasenversatz oder einem anderen Zwischenergebnis die Fluidgröße, beispielsweise einen Durchfluss, bestimmt werden. Die Bestimmung von Durchflüssen in Abhängigkeit eines Laufzeitunterschieds bzw. Phasenversatzes eines Messsignals ist prinzipiell bekannt und soll nicht detailliert erläutert werden.

Die vorangehend erläuterte Ermittlung eines Zwischenergebnisses in Schritt S13 ist nicht notwendig erforderlich. Alternativ könnte in Schritt S13 unmittelbar die Fluidgröße berechnet werden.

Das beschriebene Vorgehen, bei dem der Phasenversatz für die zweite Schwingungsmode nur dann berücksichtigt wird, wenn eine Ermittlungsbedingung erfüllt ist, kann besonders hohe Messfrequenzen oder auch einen besonders energiesparenden Betrieb der Messeinrichtung 1 ermöglichen. Zur Erhöhung der Robustheit des Verfahrens oder wenn bekannt ist, dass es in einer Messsituation häufig und plötzlich zu Durchflussänderungen kommen kann oder Ähnliches, kann es auch vorteilhaft sein, die Ermittlung des zweiten Phasenversatzes für die zweite Schwingungsmode stets durchzuführen.

Bezugszeichenliste

| | |
|---|---|
| 1 | Messeinrichtung |
| 2 | Steuereinrichtung |
| 3 | Messrohr |
| 4 | Innenraum |
| 5 | Schwingungswandler |
| 6 | Schwingungswandler |
| 7 | Pfeil |
| 8 | Ultraschallstrahl |
| 9 | Seitenwand |
| 10 | Dicke |
| 11 | Pfeil |
| 12 | Wandabschnitt |
| 13 | Pfeil |
| 14 | Rayleigh-Winkel |
| 15 | Schwingungswandler |
| 16 | Kopplungsbereich |
| 17 | Kopplungsbereich |
| 18 | Schwingelement |
| 19 | Schwingelement |
| 20 | Abstand |
| 21 | Mitte |
| 22 | Mitte |
| 23 | Ausbreitungsrichtung |
| 24 | Ausbreitungsrichtung |
| 25 | Wellenlänge |
| 26 | Wellenlänge |
| 27 | Schalteinrichtung |
| 28 | Inverterschaltung |
| 29 | Verzögerungselement |
| 30 | Ultraschallstrahl |
| 31 | Rayleigh-Winkel |

| | |
|---|---|
| S1-S14 | Schritt |

**Patentansprüche**

1. Verfahren zur Ermittlung einer ein Fluid und/oder eine Fluidströmung des Fluids betreffenden Fluidgröße durch eine Messeinrichtung (1), insbesondere durch einen Durchflusszähler, die ein Messrohr (3), das zur Aufnahme oder Führung eines Fluids dient, und einen an einer Seitenwand (9) des Messrohrs (3) angeordneten ersten und zweiten Schwingungswandler (5, 6) aufweist, wobei die Steuereinrichtung (2) für eine erste Messrichtung den ersten Schwingungswandler (5) zur Anregung einer in der Seitenwand (9) geführten Messwelle und für eine zweite Messrichtung den zweiten Schwingungswandler (6) zur Anregung einer in der Seitenwand (9) geführten Messwelle ansteuert, wobei die angeregten Messwellen jeweils direkt in der Seitenwand (9) oder indirekt über das Fluid zu dem jeweils anderen Schwingungswandler (5, 6) geführt und dort zur Ermittlung eines jeweiligen Empfangssignals erfasst werden, wobei ein erster Phasenversatz zwischen den für die erste und die zweite Messrichtung erfassten Empfangssignalen ermittelt wird, **dadurch gekennzeichnet, dass** der erste Phasenversatz für eine erste Schwingungsmode der Seitenwand (9) ermittelt wird,

   - wobei entweder stets oder ausschließlich bei Erfüllung einer von dem ersten Phasenversatz abhängenden Ermittlungsbedingung die Messung für eine zweite Schwingungsmode der Seitenwand (9) wiederholt wird, um einen zweiten Phasenversatz zu ermitteln, wonach die Fluidgröße in Abhängigkeit des ersten und des zweiten Phasenversatzes derart ermittelt wird, dass die Fluidgröße oder ein Zwischenergebnis, aus dem die Fluidgröße berechnet wird, berechnet wird, indem zu dem ersten Phasenversatz oder einem aus dem ersten Phasenversatz berechneten Rechenwert ein fester Offsetwert addiert wird, wenn der zweite Phasenversatz einen vorgegebenen Grenzwert überschreitet oder umgekehrt, oder
   - wobei die erste Schwingungsmode in Abhängigkeit eines Prognosewertes, der einen erwarteten Fluiddurchfluss durch das Messrohr oder eine von dem erwarteten Fluiddurchfluss abhängige Größe betrifft, gewählt wird.

2. Verfahren nach Anspruch 1, **dadurch gekennzeichnet, dass** eine vorgegebene Beziehung jedem Paar aus erstem und zweitem Phasenversatz eine Fluidgröße zuordnet oder dass die Fluidgröße in Abhängigkeit eines Zwischenergebnisses ermittelt wird, wobei eine vorgegebene Beziehung jedem Paar aus erstem und zweitem Phasenversatz ein Zwischenergebnis zuordnet.

3. Verfahren nach einem der vorangehenden Ansprüche, **dadurch gekennzeichnet, dass** die Erfüllung der Ermittlungsbedingung von Phasenversätzen für die erste Schwingungsmode abhängt, die zu zumindest zwei verschiedenen Zeitpunkten erfasst werden.

4. Verfahren nach einem der vorangehenden Ansprüche, **dadurch gekennzeichnet, dass** die Ermittlung des Empfangssignals für die zweite Schwingungsmode jeweils in einem Erfassungszeitfenster erfolgt, wobei der Anfangszeitpunkt des Erfassungszeitfensters in Abhängigkeit des Phasenversatzes für die erste Schwingungsmode ermittelt wird.

5. Verfahren nach einem der vorangehenden Ansprüche, **dadurch gekennzeichnet, dass** der erste und/oder der zweite Schwingungswandler (5, 6) mehrere Schwingelemente (18, 19) umfassen, die in voneinander beabstandeten Kopplungsbereichen (16, 17) mit der Seitenwand (9) des Messrohrs (3) gekoppelt sind und durch die jeweils zur Ermittlung des ersten Phasenversatzes für die erste Schwingungsmode und/oder des zweiten Phasenversatzes für die zweite Schwingungsmode in dem jeweiligen Kopplungsbereich (16, 17) eine in der Seitenwand (9) geführte Teilwelle derart angeregt wird, dass bei der Überlagerung der Teilwellen zu der jeweiligen Messwelle die jeweils andere Schwingungsmode durch eine destruktive Interferenz der Teilwellen zumindest teilweise ausgelöscht wird.

6. Verfahren nach Anspruch 5, **dadurch gekennzeichnet, dass** zur modenselektiven Anregung der ersten und/oder zweiten Schwingungsmode ein erstes und ein zweites der Schwingelemente (18, 19) derart angesteuert werden, dass der zeitliche Verlauf der Schwingungsamplitude des zweiten Schwingelements (19) dem um eine Verzögerungszeit verzögerten zeitlichen Verlauf der Schwingungsamplitude des ersten Schwingelements (18) entspricht.

7. Verfahren nach Anspruch 5 oder 6, **dadurch gekennzeichnet, dass** die Anregung der Schwingelemente (18, 19) derart erfolgt, dass die Schwingungsmuster eines ersten und eines zweiten der Schwingelemente (18, 19) einander mit einer vorgegebenen relativen Polarität und/oder einem vorgegebenen relativen Phasenversatz entsprechen, wobei sich die zur modenselektiven Anregung der ersten Schwingungsmode und zur modenselektiven Anregung der zweiten Schwingungsmode genutzten vorgegebenen relativen Polaritäten und/oder Phasenversätze voneinander unterscheiden.

8. Verfahren nach einem der vorangehenden Ansprüche, **dadurch gekennzeichnet, dass** der erste und/oder der zweite Schwingungswandler (5, 6) die mehreren oder mehrere Schwingelemente (18, 19) umfassen, die in voneinander beabstandeten Kopplungsbereichen (16, 17) mit der Seitenwand (9) des Messrohrs (3) gekoppelt sind, wobei zur Erfassung der jeweiligen Empfangssignale zur Ermittlung des ersten Phasenversatzes für die erste Schwingungsmode und/oder des zweiten Phasenversatzes für die zweite Schwingungsmode Teilsignale der einzelnen Schwingelemente (18, 19) derart überlagert werden, dass durch die jeweils andere Schwingungsmode verursachte Teilsignale zumindest teilweise ausgelöscht werden.

9. Verfahren nach Anspruch 8, **dadurch gekennzeichnet, dass** die jeweiligen Teilsignale zur Ermittlung des ersten Phasenversatzes zueinander addiert und zur Ermittlung des zweiten Phasenversatzes voneinander subtrahiert werden oder umgekehrt.

10. Verfahren nach Anspruch 8 oder 9, **dadurch gekennzeichnet, dass** zur Ermittlung des Empfangssignals Teilsignale eines ersten der Schwingelemente (18) und um eine Verzögerungszeit verzögerte Teilsignale eines zweiten der Schwingelemente (19) zueinander addiert oder voneinander subtrahiert werden, wobei zur Ermittlung der Empfangssignale für die erste und zweite Schwingungsmode voneinander unterschiedliche Verzögerungszeiten verwendet werden.

11. Messeinrichtung, insbesondere Durchflussmesser, mit einem Messrohr (3), das zur Aufnahme oder zur Führung eines Fluids dient, einem an einer Seitenwand (9) des Messrohrs (3) angeordneten ersten und zweiten Schwingungswandler (5, 6) und einer Steuereinrichtung (2), **dadurch gekennzeichnet, dass** die Steuereinrichtung (2) zur Durchführung des Verfahrens nach einem der vorangehenden Ansprüche eingerichtet ist.

**Claims**

1. Method for ascertaining a fluid variable relating to a fluid and/or a fluid flow of the fluid by way of a measuring device (1), in particular by way of a flowmeter, which comprises a measuring tube (3), which serves to receive or conduct a fluid, and a first and second oscillation transducer (5, 6) arranged on a side wall (9) of the measuring tube (3), wherein the control device (2) drives the first oscillation transducer (5) to excite a measurement wave conducted in the side wall (9) for a first measurement direction and drives the second oscillation transducer (6) to excite a measurement wave conducted in the side wall (9) for a second measurement direction, wherein the excited measurement waves are each conducted to the respective other oscillation transducer (5, 6), either directly in the side wall (9) or indirectly through the fluid, and are captured there for the purposes of ascertaining a respective reception signal, wherein a first phase offset is ascertained between the reception signals captured for the first measurement direction and for the second measurement direction, **characterized in that** the first phase offset is ascertained for a first oscillation mode of the side wall (9),

   - wherein the measurement is repeated, either in every case or only if an ascertainment condition that depends on the first phase offset is satisfied, for a second oscillation mode of the side wall (9) in order to ascertain a second phase offset, after which the fluid variable is ascertained on the basis of the first and the second phase offset in such a way that the fluid variable, or an intermediate result from which the fluid variable is calculated, is calculated by virtue of a set offset value being added to the first phase offset or to a calculation value calculated from the first phase offset if the second phase offset exceeds a specified limit, or vice versa, or
   - wherein the first oscillation mode is chosen on the basis of a predicted value, which relates to an expected fluid flow through the measuring tube or a variable dependent on the expected fluid flow.

2. Method according to Claim 1, **characterized in that** a specified relationship assigns a fluid variable to each pair of a first and second phase offset or **in that** the fluid variable is ascertained on the basis of an intermediate result, wherein a specified relationship assigns an intermediate result to each pair of a first and second phase offset.

3. Method according to either of the preceding claims, **characterized in that** satisfying the ascertainment condition depends on phase offsets for the first oscillation mode, which are captured at at least two different times.

4. Method according to any one of the preceding claims, **characterized in that** the reception signal for the second oscillation mode is in each case ascertained within a capture timeframe, wherein the start time of the capture timeframe is ascertained on the basis of the phase offset for the first oscillation mode.

5. Method according to any one of the preceding claims, **characterized in that** the first and/or the second oscillation transducer (5, 6) comprise a plurality of vibrating elements (18, 19) which are coupled to the side wall (9) of the measuring tube (3) in spaced apart coupling regions (16, 17) and by means of which a partial wave which is conducted in the side wall (9) is excited in each case for ascertaining the first phase offset for the first oscillation mode and/or the second phase offset for the second oscillation mode in the respective coupling region (16, 17) in such a way that, in the case of the superposition of the partial waves to form the respective measurement wave, the respective other oscillation mode is at least partly cancelled by a destructive interference of the partial waves.

6. Method according to Claim 5, **characterized in that** a first and a second of the vibrating elements (18, 19) are driven in such a way for mode-selective excitation of the first and/or second oscillation mode that the time curve of the oscillation amplitude of the second vibrating element (19) corresponds to the retardation time-delayed time curve of the vibration amplitude of the first vibrating element (18).

7. Method according to Claim 5 or 6, **characterized in that** the excitation of the vibrating elements (18, 19) is implemented in such a way that the oscillation patterns of a first and a second of the vibrating elements (18, 19) correspond to one another with a specified relative polarity and/or a specified relative phase offset, wherein the specified relative polarities and/or phase offsets used for the mode-selective excitation of the first oscillation mode and for the mode-selective excitation of the second oscillation mode differ from one another.

8. Method according to any one of the preceding claims, **characterized in that** the first and/or the second oscillation transducer (5, 6) comprise the or a plurality of vibration elements (18, 19) which are coupled to the side wall (9) of the measuring tube (3) in spaced apart coupling regions (16, 17), wherein, for capturing the respective reception signals for ascertaining the first phase offset for the first oscillation mode and/or the second phase offset for the second oscillation mode, partial signals of the individual vibrating elements (18, 19) are superposed in such a way that partial signals caused by the respective other vibration mode are at least partly cancelled.

9. Method according to Claim 8, **characterized in that** the respective partial signals are added to one another to ascertain the first phase offset and subtracted from one another to ascertain the second phase offset, or vice versa.

10. Method according to Claim 8 or 9, **characterized in that** partial signals of a first of the vibrating element (18) and retardation time-delayed partial signals of a second of the vibrating elements (19) are added to one another or subtracted from one another to ascertain the reception signal, wherein different retardation times are used to ascertain the reception signals for the first and second oscillation mode.

11. Measuring device, in particular flowmeter, comprising a measuring tube (3), which serves to receive or to conduct a fluid, a first and second oscillation transducer (5, 6) arranged on a side wall (9) of the measuring tube (3), and a control device (2), **characterized in that** the control device (2) is configured to carry out the method according to any one of the preceding claims.

**Revendications**

1. Procédé permettant de déterminer une grandeur de fluide concernant un fluide et/ou un écoulement de fluide du fluide par un dispositif de mesure (1), en particulier par un débitmètre, qui présente un tube de mesure (3) servant à recevoir ou guider un fluide et des premier et deuxième transducteurs de vibration (5, 6) disposés sur une paroi latérale (9) du tube de mesure (3), le dispositif de commande (2) pilotant pour une première direction de mesure le premier transducteur de vibration (5) afin d'exciter une onde de mesure guidée dans la paroi latérale (9) et pilotant pour une deuxième direction de mesure le deuxième transducteur de vibration (6) afin d'exciter une onde de mesure guidée dans la paroi latérale (9), les ondes de mesure excitées étant guidées respectivement directement dans la paroi latérale (9) ou indirectement par l'intermédiaire du fluide jusqu'à l'autre transducteur de vibration (5, 6) respectivement et y sont détectées afin de déterminer un signal de réception respectif, un premier déphasage étant déterminé entre les signaux de réception détectés pour la première et la deuxième direction de mesure, **caractérisé en ce que** le premier déphasage est déterminé pour un premier mode de vibration de la paroi latérale (9),

   - dans lequel, soit constamment, soit uniquement si une condition de détermination dépendant du premier déphasage est remplie, la mesure est répétée pour un deuxième mode de vibration de la paroi latérale (9) afin de déterminer un deuxième déphasage,
   après quoi la grandeur de fluide est déterminée en fonction du premier et du deuxième déphasage de telle sorte qu'on calcule la grandeur de fluide ou un résultat intermédiaire à partir duquel la grandeur de fluide est calculée **en ce qu'**une valeur de décalage fixe est additionnée au premier déphasage ou à une valeur mathématique calculée à partir du premier déphasage, si le deuxième déphasage dépasse une valeur limite prédéfinie, ou vice versa, ou

- dans lequel le premier mode de vibration est sélectionné en fonction d'une valeur de pronostic qui concerne un débit de fluide attendu à travers le tube de mesure ou une grandeur dépendant du débit de fluide attendu.

**2.** Procédé selon la revendication 1, **caractérisé en ce qu'**une relation prédéfinie associe une grandeur de fluide à chaque paire composée d'un premier et d'un deuxième déphasage, ou **en ce que** la grandeur de fluide est déterminée en fonction d'un résultat intermédiaire, une relation prédéfinie associant un résultat intermédiaire à chaque paire composée d'un premier et d'un deuxième déphasage.

**3.** Procédé selon l'une quelconque des revendications précédentes, **caractérisé en ce que** le fait de remplir la condition de détermination dépend de déphasages pour le premier mode de vibration qui sont détectés à au moins deux instants différents.

**4.** Procédé selon l'une quelconque des revendications précédentes, **caractérisé en ce que** la détermination du signal de réception pour le deuxième mode de vibration est effectuée respectivement dans une fenêtre de temps de détection, l'instant initial de la fenêtre de temps de détection étant déterminé en fonction du déphasage pour le premier mode de vibration.

**5.** Procédé selon l'une quelconque des revendications précédentes, **caractérisé en ce que** le premier et/ou le deuxième transducteur de vibration (5, 6) comprend/comprennent plusieurs éléments de vibration (18, 19) qui sont couplés avec la paroi latérale (9) du tube de mesure (3) dans des zones de couplage (16, 17) espacées l'une de l'autre, et qui excitent une onde partielle guidée dans la paroi latérale (9) respectivement pour déterminer le premier déphasage pour le premier mode de vibration et/ou le deuxième déphasage pour le deuxième mode de vibration dans la zone de couplage (16, 17) respective de telle sorte qu'en cas de superposition des ondes partielles pour l'onde de mesure respective, l'autre mode de vibration respectivement est au moins partiellement supprimé par une interférence destructive des ondes partielles.

**6.** Procédé selon la revendication 5, **caractérisé en ce que** pour l'excitation sélective en mode du premier et/ou du deuxième mode de vibration, un premier et un deuxième des éléments de vibration (18, 19) sont pilotés de telle sorte que la courbe de temps de l'amplitude de vibration du deuxième élément de vibration (19) correspond à la courbe de temps de l'amplitude de vibration du premier élément de vibration (18) retardée d'un temps de retard.

**7.** Procédé selon la revendication 5 ou 6, **caractérisé en ce que** l'excitation des éléments de vibration (18, 19) est effectuée de telle sorte que les schémas de vibration d'un premier et d'un deuxième des éléments de vibration (18, 19) correspondent l'un à l'autre avec une polarité relative prédéfinie et/ou un déphasage relatif prédéfini, les polarités relatives prédéfinies et/ou les déphasages relatifs prédéfinis utilisés pour l'excitation sélective en mode du premier mode de vibration et pour l'excitation sélective en mode du deuxième mode de vibration étant différents les uns des autres.

**8.** Procédé selon l'une quelconque des revendications précédentes, **caractérisé en ce que** le premier et/ou le deuxième transducteur de vibration (5, 6) comprend/comprennent les plusieurs ou plusieurs éléments de vibration (18, 19) qui sont couplés à la paroi latérale (9) du tube de mesure (3) dans des zones de couplage (16, 17) espacées l'une de l'autre, dans lequel, pour la détection des signaux de réception respectifs pour déterminer le premier déphasage pour le premier mode de vibration et/ou le deuxième déphasage pour le deuxième mode de vibration, des signaux partiels des éléments de vibration (18, 19) individuels sont superposés de telle sorte que des signaux partiels provoqués par l'autre mode de vibration respectivement sont au moins partiellement supprimés.

**9.** Procédé selon la revendication 8, **caractérisé en ce que** les signaux partiels respectifs sont additionnés les uns aux autres déterminer le premier déphasage et sont soustraits les uns des autres pour déterminer le deuxième déphasage, ou vice versa.

**10.** Procédé selon la revendication 8 ou 9, **caractérisé en ce que** pour la détermination du signal de réception, des signaux partiels d'un premier des éléments de vibration (18) et des signaux partiels retardés d'un temps de retard d'un deuxième des éléments de vibration (19) sont additionnés les uns aux autres ou soustraits les uns des autres, des temps de retard différents les uns des autres étant utilisés pour déterminer les signaux de réception pour le premier et le deuxième mode de vibration.

11. Dispositif de mesure, en particulier débitmètre, comprenant un tube de mesure (3) servant à recevoir ou à guider un fluide, un premier et un deuxième transducteur de vibration (5, 6) disposés sur une paroi latérale (9) du tube de mesure (3), et un dispositif de commande (2), **caractérisé en ce que** le dispositif de commande (2) est aménagé pour exécuter le procédé selon l'une quelconque des revendications précédentes.

FIG. 1

FIG. 2

FIG. 3

**EP 3 705 852 B1**

**IN DER BESCHREIBUNG AUFGEFÜHRTE DOKUMENTE**

**In der Beschreibung aufgeführte Patentdokumente**

- WO 2010034713 A2
- DE 102017008776 A1
- DE 102011016963 A1